# EUROPEAN PATENT APPLICATION

(11) **EP 4 670 927 A1**
(43) Date of publication of application: **31.12.2025**
(21) Application number: 23924136.7
(22) Date of filing: 18.08.2023
(51) Int. Cl.: B25J 13/08, B65B 39/00

(54) **CONTROL SYSTEM, CONTROL METHOD, AND CONTROL PROGRAM**

(30) Priority: 21.02.2023 JP 2023025469
(71) Applicant: Fujifilm Business Innovation Corp., Tokyo 107-0052 (JP)
(72) Inventor: MASUMOTO Katsumi, Nagoya-shi, Aichi 460-0008 (JP)
(74) Representative: Haseltine Lake Kempner LLP
(86) International application number: PCT/JP2023/029850
(87) International publication number: WO 2024/176491

(57) **Abstract**

A control system 1 detects work information indicating the position and the shape of a wrapper 4 wrapping a sheet bundle 14A by using a 3D sensor 6, identify the location of a side surface of the wrapper 4 by using the detected work information, control an arm 2 so that a knife 8B attached to the arm 2 moves along the outlines of sheets 14 on the identified side surface of the wrapper 4, and removes the sheet bundle 14A from the wrapper 4 opened by the knife 8B by causing the arm 2 to grip the sheet bundle 14A exposed outside the wrapper 4.

## Description

### Technical Field

The present disclosure relates to a control system, a control method, and a control program.

### Background Art

Patent Document 1 discloses a method for processing a stack of flexible substrates by using a gripper. The gripper is disposed on a robot arm and includes a lower finger and an upper finger corresponding to each other. The method includes a step of slipping the lower finger under a bottom-side substrate of the stack which is placed on a base and slipping the upper finger above a top-side substrate of the stack and a step of gripping the stack by tightening the stack between the bottom-side substrate and the top-side substrate. The method also includes: a step of raising a front part of the stack by the gripper using a first lift so that the entire stack is in a dangling state and raising the gripper until the stack faces vertically downward while the gripper is following the tilting state of the front part of the stack; a step of moving the stack in the dangling state to a support member by the gripper; a step of lowering the stack in the support member by the gripper so that a rear part of the stack at the opposite side of the front part of the stack contacts the support member; and a step of further lowering, before removing the gripper from the stack, the gripper while horizontally shifting the stack in a direction from the bottom-side substrate to the top-side substrate so as to arrange the entire stack on the support member in a state in which the bottom-side substrate faces upward.

### Citation List

### Patent Document

Patent Document 1: Japanese Unexamined Patent Application Publication (Translation of PCT Application) No. 2017-519648

### Summary of Invention

### Technical Problem

In humid regions, such as Asia, it is business customary to cover sheets of paper in wrapping paper and then to distribute them to reduce the influence of moisture on the sheets.

Before setting sheets in a printer, for example, it is thus necessary to remove a bundle of sheets from wrapping paper. A sheet of paper is more likely to bend than another type of sheet, such as a resin sheet. Additionally, when opening wrapping paper, sheets inside the wrapping paper may be damaged, and only a skilled operator does this work for taking out sheets of paper so far.

At least one exemplary embodiment of the present disclosure provides a control system, a control method, and a control program that can make it possible to remove a bundle of sheets from wrapping paper without intervention of a skilled operator.

### Solution to Problem

A control system according to a first aspect includes a processor configured to: detect, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line; identify, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper; control an arm to be used for gripping an object so that a cutting device attached to the arm moves along outlines of the sheets on the identified side surface of the wrapping paper; and remove the sheet bundle from the wrapping paper opened by the cutting device by causing the arm to grip the sheet bundle exposed outside the wrapping paper.

According to a second aspect, in the control system of the first aspect, the processor is configured to: control the arm, before opening the side surface of the wrapping paper, so that the arm contacts the side surface of the wrapping paper, which is to be opened, to shift the wrapping paper in a direction intersecting with the side surface; and identify the location of the side surface by detecting, with the three-dimensional sensor, the three-dimensional coordinate values and the inclination of the wrapping paper that has shifted.

According to a third aspect, in the control system according to the second aspect, the processor is configured to: obtain an attribute value representing an attribute of the sheets wrapped in the wrapping paper; and setting, by using the obtained attribute value of the sheets, strength of force used by the arm to shift the wrapping paper in the direction intersecting with the side surface of the wrapping paper.

According to a fourth aspect, in the control system according to the third aspect, the obtained attribute value indicates the number of sheets in the wrapping paper, a size of the sheets, and a ream weight or a basis weight of the sheets.

According to a fifth aspect, in the control system according to the fourth aspect, the obtained attribute value also indicates a material of the wrapping paper.

According to a sixth aspect, in the control system according to one of the first through fifth aspects, the processor is configured to control the arm so that the cutting device opens the side surface of the wrapping paper at a position included in a range above a center of the side surface and below a top edge of the side surface, in a state in which the wrapping paper is placed on a table so that the image forming surfaces of the sheets wrapped in the wrapping paper oppose a loading surface of the table disposed along a floor.

According to a seventh aspect, in the control system according to the sixth aspect, the processor is configured to control the arm to eliminate a piece of the opened wrapping paper remaining above the sheets after the side surface of the wrapping paper is opened.

According to an eighth aspect, in the control system according to the seventh aspect, the processor is configured to perform control, before causing the arm to grip the sheet bundle exposed outside the opened wrapping paper, to cause the arm to contact the sheets to arrange positions of the sheets so that positions of the outlines of the individual sheets are contained in a predetermined range when the sheets exposed outside the opened wrapping paper are seen from a position above the image forming surfaces of the sheets.

According to a ninth aspect, in the control system according to one of the first through fifth aspects, the processor is configured to detect the three-dimensional coordinate values and the inclination of the wrapping paper by using the three-dimensional sensor, the three-dimensional sensor being a three-dimensional sensor located at a fixed place so as not to change a relative position between the three-dimensional sensor and the wrapping paper.

A control method according to a tenth aspect includes: detecting, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line; identifying, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper; controlling an arm to be used for gripping an object so that a cutting device attached to the arm moves along outlines of the sheets on the identified side surface of the wrapping paper; and removing the sheet bundle from the wrapping paper opened by the cutting device by causing the arm to grip the sheet bundle exposed outside the wrapping paper.

A control program according to an eleventh aspect is a program causing a computer to execute a process including: detecting, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line; identifying, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper; controlling an arm to be used for gripping an object so that a cutting device attached to the arm moves along outlines of the sheets on the identified side surface of the wrapping paper; and removing the sheet bundle from the wrapping paper opened by the cutting device by causing the arm to grip the sheet bundle exposed outside the wrapping paper.

### Advantageous Effects of Invention

According to the first, tenth, and eleventh aspects, it is possible to provide a control system, a control method, and a control program that can make it possible to remove a sheet bundle from wrapping paper without intervention of a skilled operator.

According to the second aspect, it is possible to allow the arm to grip a sheet bundle more easily than when wrapping paper is not shifted.

According to the third aspect, it is possible to move wrapping paper by a prescribed distance or longer regardless of which type of sheets are wrapped by the wrapping paper.

According to the fourth aspect, it is possible to set the strength of force to move wrapping paper based on the weight of sheets wrapped by the wrapping paper.

According to the fifth aspect, it is possible to set the strength of force to move wrapping paper based on the friction force of the wrapping paper.

According to the sixth aspect, it is possible to allow the arm to grip a sheet bundle more easily than when the side surface of wrapping paper is opened at a position in a range from the center of the side surface to the bottom of the side surface.

According to the seventh aspect, it is possible to separate wrapping paper from a sheet bundle wrapped in the wrapping paper without mixing them with each other.

According to the eighth aspect, it is possible to allow the arm to grip a sheet bundle more easily than when the positions of sheets are not arranged to be flat.

According to the ninth aspect, it is possible to reduce the time taken to detect the three-dimensional coordinates and the inclination of wrapping paper, compared with when a three-dimensional sensor is attached to the arm.

### Brief Description of Drawings

[Fig. 1] Fig. 1 illustrates an example of the configuration of a control system.
[Fig. 2] Fig. 2 illustrates an example of the inclination of a wrapper.
[Fig. 3] Fig. 3 illustrates an example of a gripper.
[Fig. 4] Fig. 4 illustrates an example of the functional configuration of a control device.
[Fig. 5] Fig. 5 illustrates a wrapper loaded on a loading table.
[Fig. 6] Fig. 6 illustrates examples of the major elements of the electrical system configuration of the control device.
[Fig. 7] Fig. 7 is a flowchart illustrating an example of sheet handling processing.
[Fig. 8] Fig. 8 illustrates that a wrapper is being shifted by an arm.
[Fig. 9] Fig. 9 illustrates an example of a movement path of knives.
[Fig. 10] Fig. 10 illustrates an example of the position at which a side surface of a wrapper is opened by a knife.
[Fig. 11] Fig. 11 illustrates an example of the state of a sheet bundle after an upper wrapper is removed.
[Fig. 12] Fig. 12 illustrates a state in which a sheet bundle is to be gripped by a gripper.
[Fig. 13] Fig. 13 illustrates a state in which a sheet bundle is gripped by grippers. Description of Embodiments

An exemplary embodiment of the disclosure will be described below with reference to the drawings. The same element is designated by like reference numeral and the same operation is designated by like step number throughout the drawings and an explanation thereof will not be repeated.

### <System Configuration>

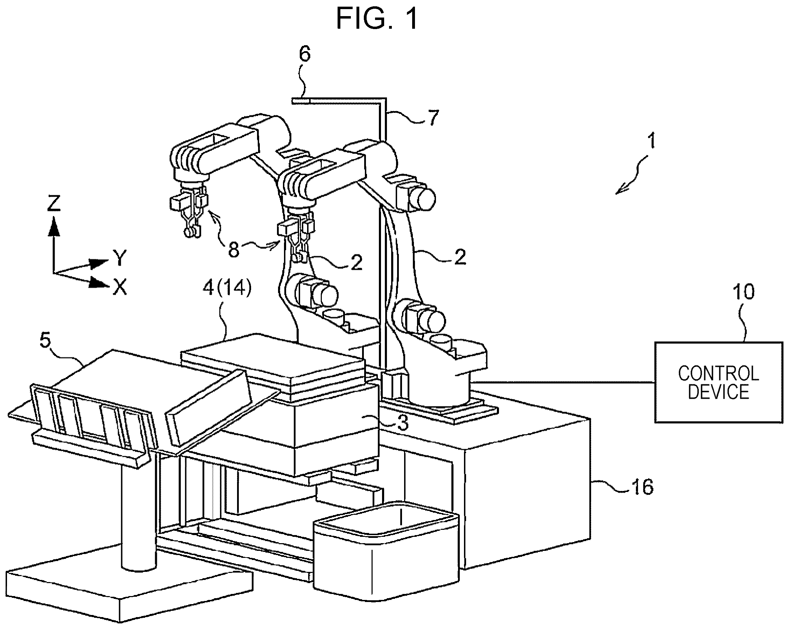

Fig. 1 illustrates an example of the configuration of a control system 1 that handles sheets 14 used for printing, for example. The control system 1 includes arms 2 and a control device 10 that controls the arms 2. Each arm 2 is used for gripping an object with a gripper 8 attached to the forward end of the arm 2.

Sheets 14 used for printing are wrapped in wrapping paper 4 and are then transported to reduce a quality change caused by moisture. A bundle of sheets 14 wrapped in the wrapping paper 4 is thus placed on a loading table 3 installed within the operating ranges of the arms 2. Specifically, the bundle of sheets 14 is placed on the loading table 3 so that the image forming surfaces of the sheets 14 oppose the loading surface of the loading table 3.

Hereinafter, the wrapping paper 4 wrapping a bundle of sheets 14 will be called a "wrapper 4" according to customary practice. The shape of the sheets 14 to be handled in the control system 1 is not limited to a specific shape, and cut paper having a rectangular shape is used as the sheets 14 in one example. The shape of the wrapper 4 wrapping a bundle of sheets 14 is accordingly a cuboid. To make it easy to place a bundle of sheets 14 wrapped in the wrapper 4, the shape of the loading surface of the loading table 3 is also a rectangle. A bundle of sheets 14 is constituted by multiple sheets 14, and hereinafter, it will be called a "sheet bundle 14A".

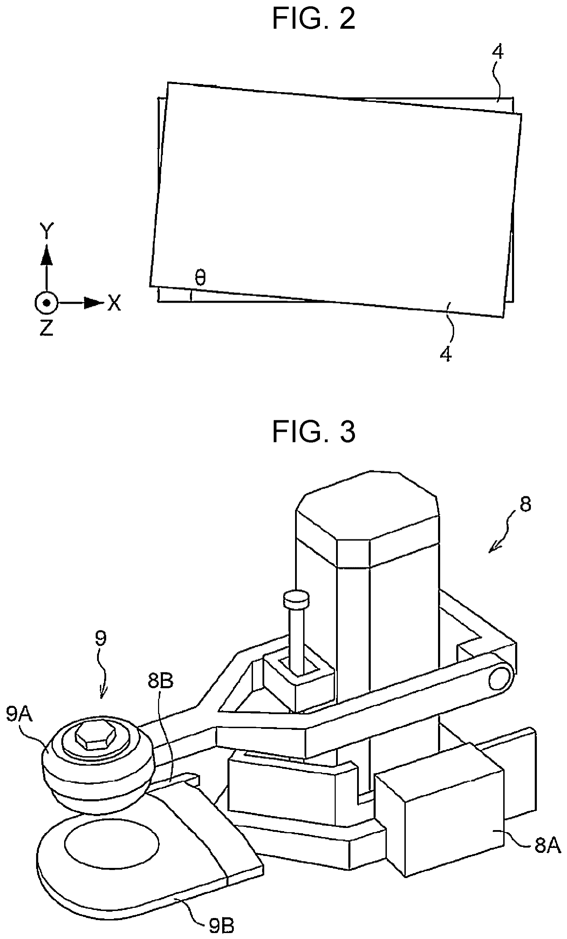

The control device 10 controls the arms 2 open the wrapper 4 wrapping the sheet bundle 14A placed on the loading table 3 with a knife 8B (see Fig. 3) and to grip the sheet bundle 14A exposed outside the wrapper 4 with the gripper 8 and to be removed from the wrapper 4. The sheet bundle 14A removed from the wrapper 4 is then transported to a jogger 5 by the arms 2. The knife 8B is an example of a cutting device attached to the arm 2.

The jogger 5 is a device that arranges the sheet bundle 14A to align the outline of the individual sheets 14 before starting a working process, such as printing, collating, and binding, for example, using the sheets 14.

A pillar 7 is mounted on a stand 16 on which the arms 2 are placed, and a 3D sensor 6 is attached to the forward end of the pillar 7.

The 3D sensor 6 is an example of a three-dimensional sensor that measures the position, in a three-dimensional space, of the wrapper 4 that wraps the sheet bundle 14A, which is placed on the loading table 3.

The position of the wrapper 4 in the three-dimensional space is represented by the values of the three-dimensional coordinates set in the three-dimensional space (hereinafter called the "three-dimensional coordinate values") and the inclination of the wrapper 4.

In the control system 1, a predetermined position in the three-dimensional space is set to the origin of the three-dimensional coordinates. In one example, one vertex on the loading surface of the loading table 3 is set to the origin of the three-dimensional coordinates in the exemplary embodiment. In this case, as seen from a position opposing the loading surface of the loading table 3, the longitudinal direction of the loading table 3 is set to the X axis, the widthwise direction of the loading table 3 is set to the Y axis, and the vertical direction is set to the Z axis. The loading surface of the loading table 3 may not necessarily be horizontally placed with respect to the floor. For example, the loading surface of the loading table 3 may be tilted with respect to the floor so as to make it easy for the arms 2 to grip the wrapper 4. In the exemplary embodiment, however, it is assumed that the loading surface of the loading table 3 is horizontally placed with respect to the floor.

The 3D sensor 6 measures the distances to the individual points of the wrapper 4 to detect the three-dimensional coordinate values of the wrapper 4 at the individual points. Detecting the three-dimensional coordinate values of the wrapper 4 at the individual points also means detecting the shape of the wrapper 4. As the 3D sensor 6, various sensors that can measure the distance to an object is used. Examples of such sensors are a LiDAR (Light Detection And Ranging) sensor, a TOF (Time-of-Flight) sensor, and a stereo camera.

The 3D sensor 6 also detects the inclination of the wrapper 4 by using the detected three-dimensional coordinate values of the wrapper 4. The inclination of the wrapper 4 is the inclination of the wrapper 4 with respect to a predetermined reference line in the three-dimensional space.

If the X axis is set to the reference line, for example, the inclination of the wrapper 4 is represented by the angle θ formed between the X axis in the XY plane and the long side of the wrapper 4 loaded on the loading table 3. That is, the inclination of the wrapper 4 also serves as an index indicating the state of the wrapper 4 placed on the loading table 3, such as how exact the wrapper 4 is parallel with the sides of the loading table 3.

The above-described representation of the inclination of the wrapper 4 is only an example. The inclination of the wrapper 4 may be represented in a different manner. For example, if, as shown in Fig. 2, a different wrapper 4 is placed adjacent to and under a wrapper 4 whose inclination is to be detected, the long side of the different wrapper 4 in the XY plane may be set to a reference line, and the angle θ formed between the long sides of the two wrappers 4 may be used as the inclination of the wrapper 4.

In the example in Fig. 1, the 3D sensor 6 is attached to the pillar 7. However, the 3D sensor 6 may be placed at another location if it is a location where the 3D sensor 6 can see the entirety of the wrapper 4 in the Z-axis direction, such as above the image forming surfaces of the sheets 14 wrapped in the wrapper 4, namely, above the wrapper 4, and the relative position with the wrapper 4 is not changed. In one example, the 3D sensor 6 may be fixed to the ceiling of a room where the arms 2 are installed. The 3D sensor 6 may be attached to the arm 2. In this case, however, to detect the three-dimensional coordinate values and the inclination of the wrapper 4, it is necessary to move the 3D sensor 6 along the shape of the wrapper 4 or to move the 3D sensor 6 to a position at which it can see the entirety of the wrapper 4 and then to cause it to detect the three-dimensional coordinate values and the inclination of the wrapper 4.

Additionally, since the arm 2 is moving, it is also necessary to consider the position of the arm 2 to detect the three-dimensional coordinate values and the inclination of the wrapper 4. Because of the above-described reasons, using the 3D sensor 6 attached to the arm 2 may take more time to detect the three-dimensional coordinate values and the inclination of the wrapper 4 than using the 3D sensor 6 mounted on a fixed location, such as the pillar 7 or the ceiling of the room.

Although the control system 1 includes two arms 2 in the example in Fig. 1, there is no limitation on the number of arms 2. One arm 2 or three or more arms 2 may be provided in the control system 1. Nevertheless, if the control system 1 includes only one arm 2, the sheet bundle 14A is gripped by one gripper 8, which makes it more difficult to move the sheet bundle 14A than when multiple grippers 8 grip the sheet bundle 14A. Hence, the use of multiple arms 2 is preferable. On the other hand, however, as more arms 2 are provided, the cost of the control system 1 becomes higher, and the control operation also becomes complicated. Thus, it is preferable to provide two arms 2 in the control system 1.

### <Structure of Gripper>

Fig. 3 illustrates an example of the gripper 8 attached to the forward end of the arm 2. The gripper 8 includes two claws 9, a knife 8B, and a suction portion 8A. The claws 9 grip an object under the control of the control device 10, for example. The knife 8B is used for opening the wrapper 4. The suction portion 8A sucks pieces of the opened wrapper 4.

A claw 9A, which is one of the two claws 9, is a circular claw 9 whose forward end is formed in a circle. An elastic member, such as rubber, is fixed to the contact surface of the claw 9A, which is to contact the sheet bundle 14A, to make it easy to grip the sheet bundle 14A. A claw 9B, which is the other one of the two claws 9, is formed in the shape of a spatula, and the contact surface with the sheet bundle 14A is formed in a planar shape to make it easy to grip the sheet bundle 14A from downward. The claw 9B, which is formed in a spatula-like shape, can be easily slipped into, for example, a gap between two sheets 14 or a gap between the opened wrapper 4 and the sheet bundle 14A, compared with the claw 9A. An elastic member is also fixed to the contact surface of the claw 9B to contact the sheet bundle 14A. Hereinafter, the claws 9A and 9B will be called the "claw 9" if it is not necessary to individually distinguish them from each other.

The knife 8B also serves the following function, for example, as well as for opening the wrapper 4. The knife 8B is slipped into a gap between the opened wrapper 4 and the sheet bundle 14A and raises the sheet bundle 14 to form a space therebetween, thereby making it easy for the claw 9B to be inserted between the wrapper 4 and the sheet bundle 14A.

The suction portion 8A sucks the pieces of the wrapper 4 through a suction port by utilizing air suction force. The suction structure of the suction portion 8A is not limited to a particular structure. For example, the suction portion 8A may use a gel-like sheet having adhesiveness to suck the pieces of the wrapper 4. The gripper 8 may not necessarily include the suction portion 8A. In this case, the gripper 8 holds a member corresponding to the suction portion 8A with the claw 9 to suck the pieces of the wrapper 4.

### <Functional Configuration of Control Device>

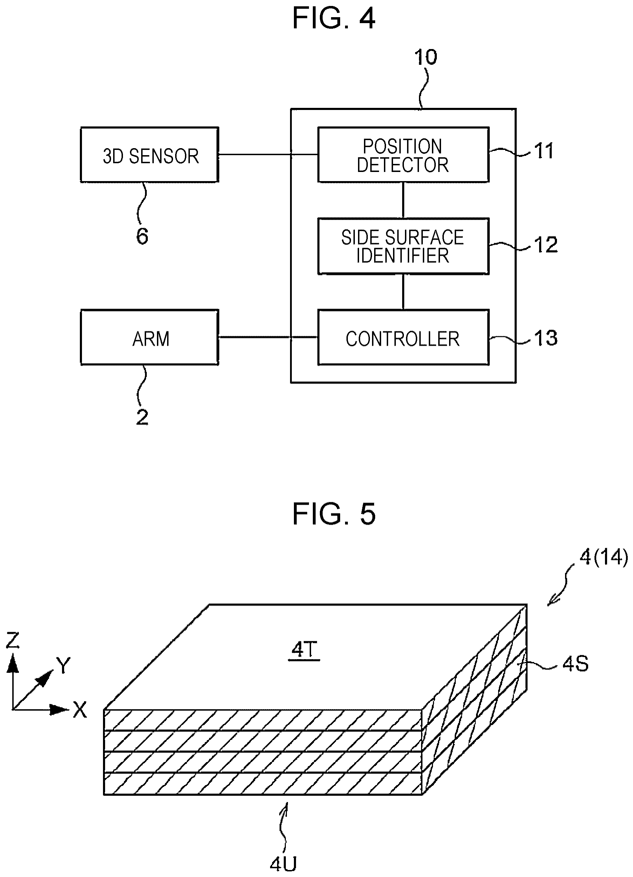

Fig. 4 illustrates an example of the functional configuration of the control device 10. The control device 10 includes functional elements, such as a position detector 11, a side surface identifier 12, and a controller 13.

By using the 3D sensor 6, the position detector 11 detects the three-dimensional coordinate values and the inclination representing the position and the shape of the wrapper 4 and those of the sheet bundle 14A wrapped in the wrapper 4.

The side surface identifier 12 identifies the locations of side surfaces 4S of the wrapper 4 by using the three-dimensional coordinate values and the inclination detected by the position detector 11. Among the surfaces of the cuboid wrapper 4, the side surfaces 4S are surfaces intersecting with the image forming surface of each sheet 14 wrapped in the wrapper 4.

Fig. 5 illustrates the wrapper 4 loaded on the loading table 3. In Fig. 5, the surfaces along the Z-axis direction indicated by the hatched portions, that is, the surfaces of the wrapper 4 in the XZ plane and the YZ plane, are the side surfaces 4S of the wrapper 4. Among the surfaces opposing the image forming surfaces of the sheets 14 wrapped in each wrapper 4, that is, among the surfaces of the wrapper 4 in the XY plane, the upper surface will be called a "top surface 4T of the wrapper 4", while the lower surface will be called a "bottom surface 4U of the wrapper 4".

The controller 13 controls each arm 2 so that the knife 8B of the gripper 8 can move on the side surfaces 4S identified by the side surface identifier 12 along the outlines of the sheets 14 wrapped in the wrapper 4 so as to open the wrapper 4. The controller 13 also controls each arm 2 to grip the sheet bundle 14A exposed outside the wrapper 4 whose side surfaces 4S are opened by the knife 8B of the gripper 8 and to take out the sheet bundle 14A from the wrapper 4.

### <Configuration of Control Device Using Computer>

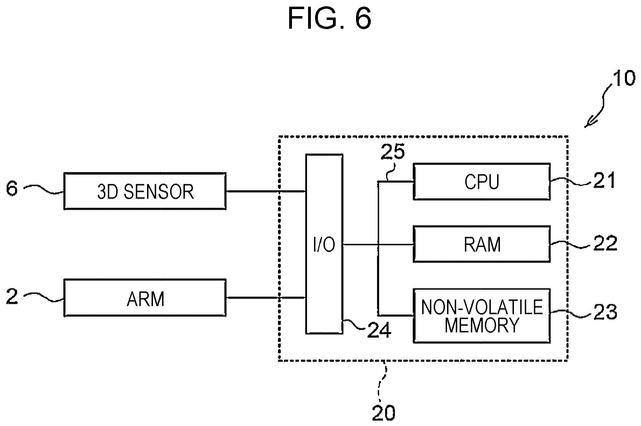

The control device 10 executing the above-described processing is constituted by a computer 20. Fig. 6 illustrates examples of the major elements of the electrical system configuration of the control system 10 constituted by the computer 20.

The computer 20 includes a CPU (Central Processing Unit) 21, a RAM (Random Access Memory) 22, a non-volatile memory 23, and an input/output interface (I/O) 24. The CPU 21 is an example of a processor that executes processing operations of the individual functional elements of the control device 10 shown in Fig. 4. The RAM 22 is used as a temporary work area for the CPU 21. The CPU 21, RAM 22, non-volatile memory 23, and I/O 24 are connected to one another via a bus 25.

The non-volatile memory 23 is an example of a storage device that can retrieve stored information even after power supplied to the non-volatile memory 23 is interrupted. As the non-volatile memory 23, a semiconductor memory, for example, is used, or a hard disk may alternatively be used. In the non-volatile memory 23, a control program that allows the computer 20 to function as the control device 10, for example, is stored.

The non-volatile memory 23 may not necessarily be built in the computer 20, and may be a portable storage device that is attachable to and detachable from the computer 20, such as a memory card.

The 3D sensor 6 and the arms 2 are connected to the I/O 24. Devices connected to the I/O 24 are not limited to these devices. For example, another device, such as a communication device that communicates with an external device via a communication network, such as the internet or a LAN (Local Area Network), may be connected to the I/O 24.

### <Operation of Control System>

The operation of the control system 1 for taking out the sheet bundle 14A from the wrapper 4 by using the arms 2 will now be explained below.

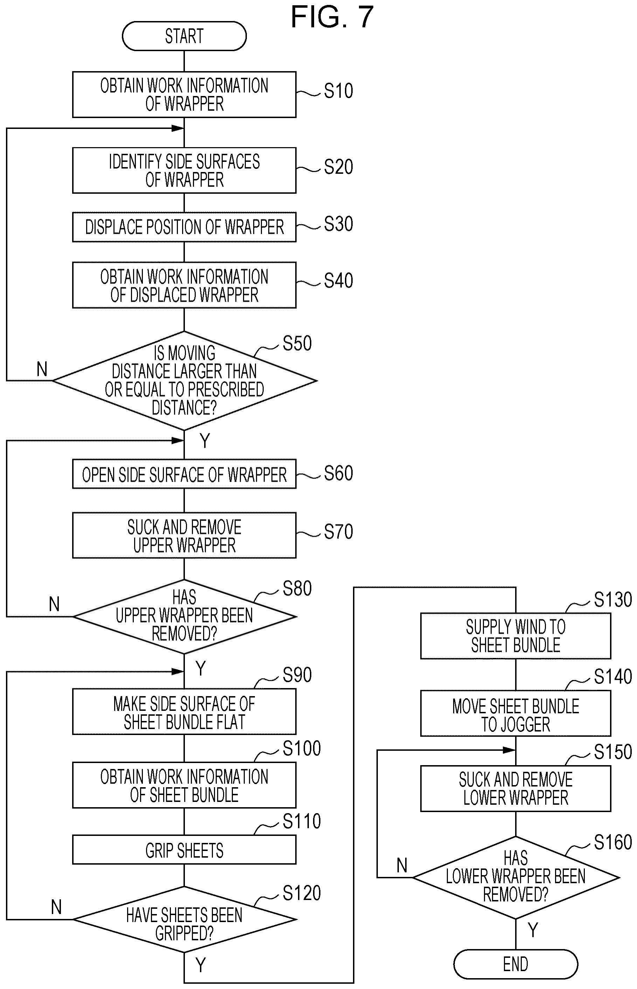

Fig. 7 is a flowchart illustrating an example of sheet handling processing executed by the CPU 21 of the control device 10 in response to a user instruction to take out the sheet bundle 14A.

The control program describing the sheet handling processing is prestored in the non-volatile memory 23 of the control device 10, for example. The CPU 21 of the control device 10 reads the control program from the non-volatile memory 23 and executes the sheet handling processing. It is assumed that multiple sheet bundles 14A which are each wrapped in a wrapper 4 are placed on the loading table 3.

In step S10, the CPU 21 controls the 3D sensor 6 to detect the three-dimensional coordinate values and the inclination of a wrapper 4 wrapping the sheet bundle 14A placed at the topmost position on the loading table 3. The wrapper 4 described below is the wrapper 4 wrapping the sheet bundle 14A placed at the topmost position on the loading table 3. The wrapper 4 wrapping the sheet bundle 14A placed at the topmost position on the loading table 3 is an example of a wrapper 4 to be opened under the control of the control system 1. The three-dimensional coordinate values and the inclination of the wrapper 4 will be called "work information".

In step S20, by using the work information of the wrapper 4 obtained in step S10, the CPU 21 recognizes the position and the shape of the wrapper 4 and identifies the locations of the side surfaces 4S of the wrapper 4.

In step S30, the CPU 21 controls an arm 2 so that the claw 9 of the gripper 8 contacts a side surface 4S of the wrapper 4 and pushes out the wrapper 4 horizontally in a direction intersecting with the direction along the side surface 4S of the wrapper 4, that is, the claw 9 pushes out the wrapper 4 along the XY plane. The side surface 4S of the wrapper 4 that the claw 9 contacts may be either one of the side surface including the long side of the wrapper 4 and the side surface 4S including the short side of the wrapper 4.

The CPU 21 may control multiple arms 2 to push out the wrapper 4. However, pushing out the wrapper 4 with one arm 2 can reduce the control time for the arm 2 to shift the wrapper 4.

With the above-described control operation, one end of the wrapper 4 is displaced from that of another wrapper 4 underneath in the X-axis direction or the Y-axis direction.

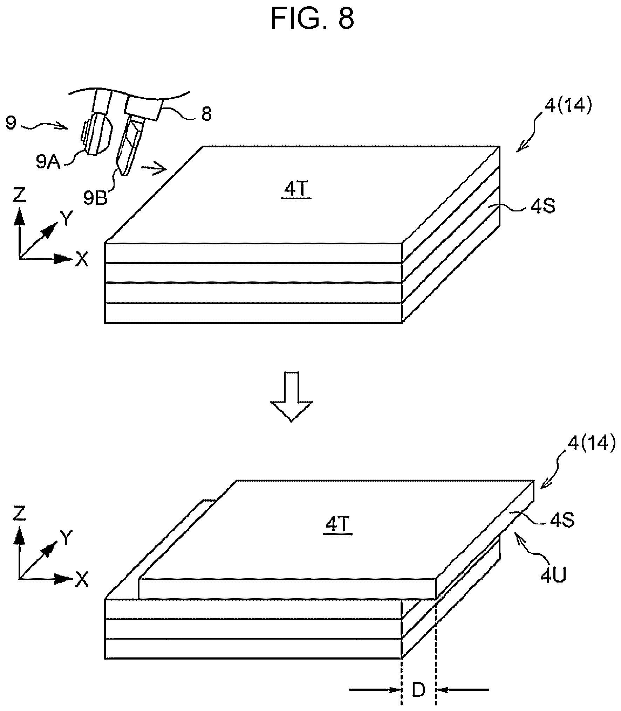

Fig. 8 illustrates that the wrapper 4 is being shifted by the arm 2. In the example in Fig. 8, the arm 2 pushes out the side surface 4S including the short side of the wrapper 4 to shift the wrapper 4 in the X-axis direction. Shifting the position of the wrapper 4 from another wrapper 4 underneath in this manner can form a space at a front portion on the bottom surface 4U of the wrapper 4 for the claw 9B to slip into, thereby making it easy for the claw 9 of the gripper 8 to grip the sheet bundle 14A wrapped in the wrapper 4.

When pushing out the wrapper 4 under the control of the CPU 21, if the displacement amount from the side surface 4S of the wrapper 4 to that of another wrapper 4 underneath in the shifting direction, that is, the moving distance D of the wrapper 4, is too short, it makes it difficult for the claw 9 of the gripper 8 to grip the sheet bundle 14A. There is a prescribed distance that allows the claw 9 of the gripper 8 to easily grip the sheet bundle 14A. It is thus preferable that the CPU 21 control the arm 2 to push out the wrapper 4 with a certain strength of force that can shift the wrapper 4 by the amount of the moving distance D equal to or longer than this prescribed distance.

To implement this, the CPU 21 obtains attribute values representing attributes of the sheets 14 wrapped in the wrapper 4 and sets the strength of force used by the arm 2 to push out the wrapper 4. An attribute of the sheets 14 is a characteristic of the sheets 14, and the attribute value is a value representing this characteristic of the sheets 14.

The sheets 14 have various attributes, such as the number of sheets 14 forming the sheet bundle 14A wrapped in the wrapper 4 (which will be called "the storage number of sheets"), and the size, for example, A1 or A2, and ream weight, basis weight, thickness, and moisture content of the sheets 14. The strength of force for pushing out the wrapper 4 is subject to the weight of the sheet bundle 14A wrapped in the wrapper 4. The CPU 21 thus obtains attribute values required for calculating the weight of the sheet bundle 14A wrapped in the wrapper 4. More specifically, the CPU 21 obtains the ream weight or the basis weight of the sheets 14, the size of the sheets 14, and the storage number of sheets 14 in the wrapper 4 and calculates the weight of the sheet bundle 14A wrapped in the wrapper 4.

The strength of force for pushing out the wrapper 4 is also subject to the friction coefficient on the surface of the wrapper 4. The CPU 21 thus obtains information on the material of the wrapper 4, such as whether the wrapper 4 is kraft paper or coated paper and, if it is kraft paper, whether it is bleached kraft paper or unbleached kraft paper, and then sets the strength of force of the arm 2 to push out the wrapper 4 by taking the friction coefficient determined from the material of the wrapper 4 into consideration. The friction coefficient of recycled paper and that of non-recycled paper may be different from each other. The CPU 21 may thus obtain information indicating whether the wrapper 4 is recycled paper as an attribute value of the wrapper 4.

A user prestores the attribute values of the wrapper 4 in the non-volatile memory 23 before performing the sheet handling processing. The CPU 21 then obtains the attribute values from the non-volatile memory 23. However, the CPU 21 may obtain the attribute values of the wrapper 4 by a different approach. For example, a label indicating the attribute values of the wrapper 4 may be fixed to the wrapper 4. In this case, the CPU 21 may perform control, for example, so that the claw 9 of the gripper 8 holds a visible camera (not shown) and the visible camera takes an image of the attribute values of the wrapper 4 indicated on the label. Then, the CPU 21 performs known character recognition processing on the captured image to obtain the attribute values of the wrapper 4. Needless to say, the visible camera may be fixed to the gripper 8 in advance.

If the attribute values of the wrapper 4 indicated on the label are represented by a barcode, the CPU 21 may perform control so that the claw 9 of the gripper 8 holds a barcode reader (not shown) and the barcode reader reads the barcode to obtain the attribute values of the wrapper 4. Needless to say, the barcode reader may be fixed to the gripper 8 in advance.

In step S30 in Fig. 7, the CPU 21 controls the arm 2 to push out the wrapper 4 horizontally along the XY plane by way of example. It is sufficient, however, if the wrapper 4 is displaced from another wrapper 4 underneath. For example, the CPU 21 may control the arm 2 to pull the wrapper 4 horizontally along the XY plane while the wrapper 4 is being held by the claw 9 of the gripper 8.

Since the position of the wrapper 4 is displaced in step S30, the work information of the wrapper 4 becomes different from that obtained in step S10. In step S40, the CPU 21 controls the 3D sensor 6 to obtain the work information of the wrapper 4 and to re-recognize the position and the shape of the wrapper 4, thereby identifying the locations of the side surfaces 4S of the displaced wrapper 4.

In step S50, the CPU 21 determines whether the moving distance D of the displaced wrapper 4 is larger than or equal to the prescribed distance. If the moving distance D of the wrapper 4 is smaller than the prescribed distance, the CPU 21 returns to step S20 and repeats steps S20 through S50. That is, the CPU 21 re-identifies the locations of the side surfaces 4S of the displaced wrapper 4 and executes steps S30 and 40 until it is determined in step S50 that the moving distance D of the displaced wrapper 4 is larger than or equal to the prescribed distance.

If it is determined in step S50 that the moving distance D of the displaced wrapper 4 is larger than or equal to the prescribed distance, the CPU 21 proceeds to step S60.

In step S60, the CPU 21 controls the arm so that the knife 8B of the gripper 8 is moved along the outlines of the sheets 14 while keeping a position at which the knife 8B faces the side surfaces 4S of the wrapper 4 so as to open the side surfaces 4S.

The wrapper 4 may be of a type that is bent and is difficult to open when an edged tool is pressed against the wrapper 4. To handle such a wrapper 4, an ultrasonic cutter may be used as the knife 8B of the gripper 8 so as to make it easy to open the wrapper 4. However, a regular knife, which is not provided with a vibrator producing vibrations, unlike an ultrasonic cutter, may be used.

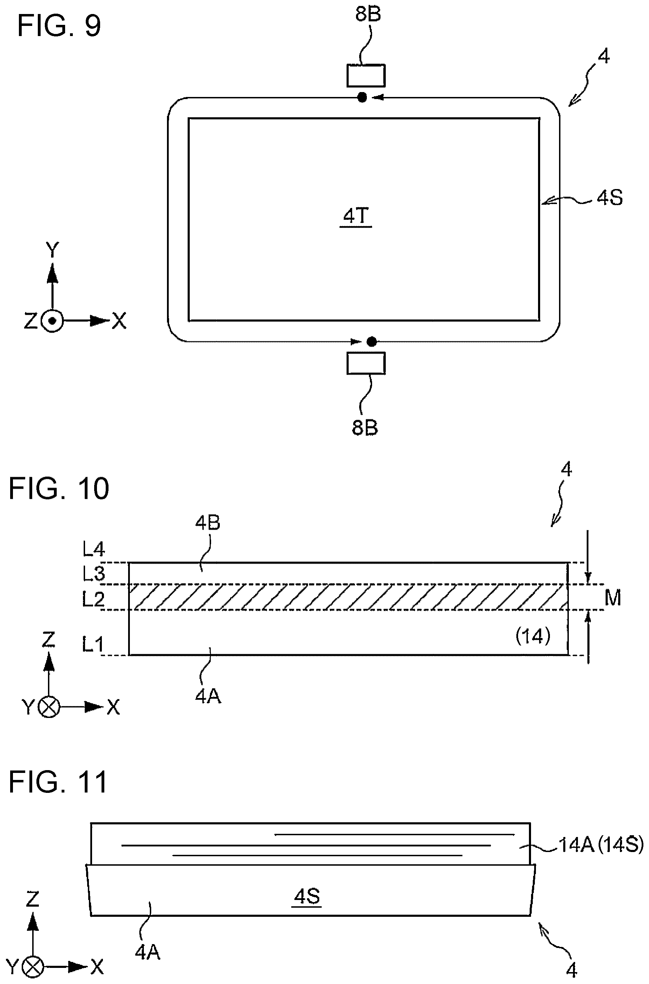

Fig. 9 illustrates an example of the movement path of the knives 8B of the grippers 8 of the arms 2 moved under the control of the CPU 21 when the top surface 4T of the wrapper 4 is seen from above in the Z-axis direction. As illustrated in Fig. 9, the CPU 21 controls the arms 2 so that the knives 8B of the grippers 8 are moved to positions of the side surfaces 4S at which the knives 8B face each other across the wrapper 4. The CPU 21 then controls the arms 2 so that the knives 8B can be kept contacting the corresponding side surfaces 4S of the wrapper 4 and be each moved clockwise or counterclockwise by half a turn along the outlines of the sheets 14 while maintaining the positions at which the knives 8B face the corresponding side surfaces 4S. With this operation, the wrapper 4 wrapping the sheet bundle 14A is separated into two upper and lower pieces of the wrapper 4.

It is sufficient if the wrapper 4 is opened to expose the sheet bundle 14A to such a degree as to allow the claws 9 of the grippers 8 to grip the sheet bundle 14A. From this viewpoint, the wrapper 4 may not necessarily be opened all around the side surfaces 4S, that is, all around the four sides of the wrapper 4, and be separated into two upper and lower pieces of the wrapper 4. For example, the side surfaces 4S of the wrapper 4 may be opened along the outlines of three sides of the wrapper 4. If, however, the side surfaces 4S of the wrapper 4 to be opened are side surfaces 4S along the outlines of two or less sides of the wrapper 4, for example, when the grippers 8 gripping the sheet bundle 14A are moved upward in the Z-axis direction, the sheet bundle 14A may be caught by the wrapper 4 and may not be able to be removed from the wrapper 4. It is thus preferable that the side surfaces 4S of the wrapper 4 be opened along the outlines of three or more sides of the wrapper 4 with the knives 8B of the grippers 8.

Needless to say, the side surfaces 4S of the wrapper 4 may be opened by moving the knife 8B of the gripper 8 of one arm 2 or the knives 8B of the grippers 8 of three or more arms 2 along the outlines of the sheets 14 under the control of the CPU 21. In the case of the use of one arm 2, the CPU 21 controls the arm 2 so that the knife 8B of the gripper 8 is moved by one turn around the side surfaces 4S of the wrapper 4 along the outlines of the sheets 14. In the case of the use of three arms 2, for example, the CPU 21 controls the arms 2 so that the knives 8B of the grippers 8 of the arms 2 are each moved by 1/3 turns of the side surfaces 4S of the wrapper 4 along the outlines of the sheets 14 without the movement paths of the knives 8B overlapping each other.

Instead of the knife 8B of the gripper 8, another cutting device (not shown), such as a cutter, may be used to open the side surfaces 4S of the wrapper 4 while being carried by the claw 9 of the gripper 8. The cutting device carried by the claw 9 of the gripper 8 is an example of a cutting device attached to the arm 2.

When opening the side surfaces 4S of the wrapper 4 as described above, the CPU 21 controls the arm 2 so that the knife 8B of the gripper 8 opens the side surface 4S at a position included in a range above the center of the side surface 4S and below the top edge of the side surface 4S.

Fig. 10 illustrates an example of the position at which the side surface 4S of the wrapper 4 is opened by the knife 8B of the gripper 8. The side surface 4S of the wrapper 4 shown in Fig. 10 is a side surface 4S in the XZ plane seen from a position that opposes the side surface 4S in the Y-axis direction.

It is assumed that, for example, the side surface 4S of the wrapper 4 is opened at a position on a line L1 which represents the bottom edge of the side surface 4S of the wrapper 4. In this case, to grip the sheet bundle 14A by the gripper 8, one of the claws 9, and more specifically, the spatula-like claw 9B, which is easier to be inserted than the claw 9A, is slipped into a gap between the sheet 14 located at the bottommost position of the sheet bundle 14A and a piece of the wrapper 4 underneath.

To insert the claw 9B into this gap, however, it is necessary that the CPU 21 control the position of the claw 9B with a precision of micrometers or smaller. Even if the CPU 21 successfully controls the position of the claw 9B with a precision of micrometers or smaller, it is still difficult to insert the claw 9B having a certain thickness into the above-described gap.

Accordingly, the side surface 4S is opened at a position at least above the line L1, thereby allowing a paper scrap forming the side surface 4S of the wrapper 4 (hereinafter called a "scrap") to remain in the lower piece of the wrapper 4. With a scrap remaining in the lower piece of the wrapper 4, the claw 9B can be guided to farther inward than the scrap while holding down the scrap from above and be inserted into the gap between the sheet 14 located at the bottommost position of the sheet bundle 14A and the piece of the wrapper 4 underneath by using the scrap as a support.

Nevertheless, if the width of the scrap remaining in the lower piece of the wrapper 4 is short, it becomes difficult for the claw 9B to hold down the scrap. Hence, a portion above a line L2 which represents the center of the side surface 4S of the wrapper 4 shown in Fig. 10 is opened so that a scrap whose width is larger than half the width of the side surface 4S of the wrapper 4 in the Z-axis direction can remain in the lower piece of the wrapper 4. This makes it easier for the claw 9B to hold down the scrap and to be guided to farther inward than the scrap, compared with when the side surface 4S of the wrapper 4 is opened at a position in a range from the line L1 to the line L2.

On the other hand, however, if the width of the scrap remaining in the lower piece of the wrapper 4 is too long, when the claw 9B holds down the scrap, the sheet bundle 14A may not be exposed until the position of the line L1 due to the tension of the wrapper 4. This makes it difficult to insert the claw 9B into the gap between the sheet 14 located at the bottommost position of the sheet bundle 14A and the piece of the wrapper 4 underneath.

For the above-described reason, it is preferable that the side surface 4S of the wrapper 4 be opened at a position in a range above the line L2 representing the center of the side surface 4S until a line L3, which is preset at a position below a line L4 representing the top edge of the side surface 4S.

For the sake of description, the lower piece of the wrapper 4 generated by opening the side surface 4S in step S60 will be called a "lower wrapper 4A", while the upper piece of the wrapper 4 generated by opening the side surface 4S will be called an "upper wrapper 4B".

After the side surface 4S of the wrapper 4 is opened, in step S70 in Fig. 7, the CPU 21 controls the arms 2 so that the suction portions 8A suck and remove the upper wrapper 4B, which forms the upper and lower pieces of the wrapper 4.

Fig. 11 illustrates an example of the state of the sheet bundle 14A when the side surface 4S of the wrapper 4 and a side surface 14S of the sheet bundle 14A in the XZ plane are seen from a position that opposes the side surfaces 4S and 14S in the Y-axis direction after the upper wrapper 4B is removed. As shown in Fig. 11, the upper side of the sheet bundle 14A is exposed, while the lower wrapper 4A remains on the lower side of the sheet bundle 14A.

The side surface 4S of the wrapper 4 may not be able to be completely opened in step S60, and part of the upper wrapper 4B may remain connected to the lower wrapper 4A. In this case, after the upper wrapper 4B is sucked by the suction portion 8A, while the arm 2 is being moved to discard the upper wrapper 4B in a trash can, the upper wrapper 4B may come off from the suction portion 8A and may not be able to be removed.

Hence, in step S80, the CPU 21 determines whether the removal of the upper wrapper 4B has been completed. When the suction portion 8A is sucking the upper wrapper 4B with suction force, a load is applied to a motor generating the suction force, unlike when the suction portion 8A is not in sucking operation. It can thus be determined that the removal of the upper wrapper 4B has been completed if the above-described load is continuously applied to the motor during the period from the start of sucking the upper wrapper 4B using the suction portion 8A until the disposal of the upper wrapper 4B in a trash can. The CPU 21 may determine whether the removal of the upper wrapper 4B has been completed by using the 3D sensor 6.

If the removal of the upper wrapper 4B has not been completed, the CPU 21 obtains work information of the wrapper 4 by using the 3D sensor 6 and returns to step S60. In this case, the CPU 21 repeats steps S60 through S80 until it is determined in step S80 that the removal of the upper wrapper 4B has been completed. That is, the CPU 21 controls the arms 2 to reopen a portion of the side surface 4S of the wrapper 4 that has not been opened.

If it is determined in step S80 that the removal of the upper wrapper 4B has been completed, the CPU 21 proceeds to step S90.

While the upper wrapper 4B is being removed, it may contact the sheet bundle 14A that has been wrapped in the wrapper 4, and one or more sheets forming the sheet bundle 14A may be displaced from the other sheets 14 horizontally along the XY plane. If a sheet 14 is displaced from the other sheets 14 horizontally, it may become more difficult for the claw 9 of the gripper 8 to grip the sheet bundle 14A than when the side surface 14S of the sheet bundle 14A is flat.

Hence, in step S90, the CPU 21 controls the arm 2 so that the spatula-like claw 9B of the gripper 8 contacts the side surface 14S of the sheet bundle 14A and make the side surface 14S flat. As a result, the side surfaces of the sheets 14 forming the sheet bundle 14A become flush with each other. "Making the side surface 14S of the sheet bundle 14A flat" refers to a state in which, when the sheet bundle 14A is seen from a position above the image forming surfaces of the exposed sheets 14 in the Z-axis direction, the positions of the outlines of the individual sheets 14 forming the sheet bundle 14A are contained within a predetermined range.

In step S100, the CPU 21 controls the 3D sensor 6 to obtain work information of the sheet bundle 14A after the side surface 14S is made flat.

In step S110, the CPU 21 recognizes the position and the shape of the sheet bundle 14A by using the work information of the sheet bundle 14A obtained in step S100, and controls the arm 2 so that the claws 9 of the grippers 8 can grip the sheet bundle 14A exposed outside the wrapper 4. When gripping the sheet bundle 14 by the claws 9 of the grippers 8, the CPU 21 determines the position of the sheet bundle 14 to be gripped by the claws 9 of the grippers 8 in accordance with the type of work. In this case, the claw 9 preferably grips a corner of the sheet bundle 14A by considering the balance to move the sheet bundle 14A. However, if it is necessary to turn over the sheet bundle 14A during working, the claw 9 may grip a portion near the center of a side of the sheet bundle 14A.

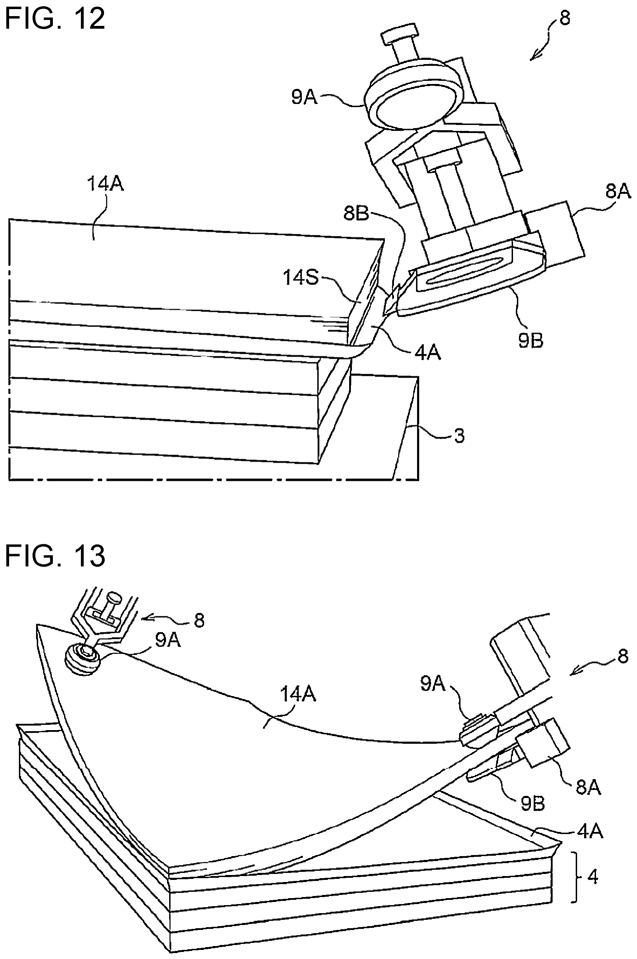

Fig. 12 illustrates a state in which the sheet bundle 14A is to be gripped by the claw 9 of the gripper 8. As discussed above, Fig. 12 illustrates a state in which the claw 9B is being guided to farther inward than a scrap of the lower wrapper 4A while holding down the scrap from above.

After the sheet bundle 14A is gripped by one arm 2, the CPU 21 controls the arm 2 to raise the gripped sheet bundle 14A, as shown in Fig. 12. The CPU 21 then controls the other arm 2 so that the claw 9B of this arm 2 is located under the claw 9A in a state in which the distance between the claws 9A and 9B is wider than the thickness of the sheet bundle 14A and that the claw 9B is inserted into the gap between the sheet bundle 14A and the lower wrapper 4A. While this state is being maintained, the CPU 21 controls this arm 2 so that the claws 9A and 9B are moved along the outlines of the sheets 14 and grip the corner of the sheet bundle 14A diagonally positioned on the opposite side of the corner of the sheet bundle 14A that has already been gripped by the other arm 2. Fig. 13 illustrates an example in which the sheet bundle 14A is gripped by the grippers 8.

In step S120 in Fig. 7, the CPU 21 determines whether the grippers 8 of the individual arms 2 have gripped the sheet bundle 14A. If the grippers 8 have not yet gripped the sheet bundle 14A, the CPU 21 obtains work information of the sheet bundle 14A by using the 3D sensor 6 and returns to step S90. The CPU 21 repeats steps S90 through S120 until it is determined in step S120 that the claws 9 of the grippers 8 have gripped the sheet bundle 14A. That is, the CPU 21 controls the arms 2 so that the sheet bundle 14A can be made flat and be gripped.

If it is determined in step S120 that the claws 9 of the grippers 8 have gripped the sheet bundle 14A, the CPU 21 proceeds to step S130.

The sheets 14 forming the sheet bundle 14A may stick to their adjacent sheets 14 due to static electricity or friction of the sheets 14.

In step S130, the CPU 21 performs control to execute wind supply to supply wind to the sheet bundle 14A from a vent (not shown) provided in the gripper 8 so as to make it easy to separate the sheets 14 from each other one by one. In wind supply to the sheet bundle 14A, using ionic wind rather than air makes it easier to remove static electricity occurring in the sheets 14 so as to facilitate the separation of the sheets 14.

In step S140, the CPU 21 controls the arms 2 so that the sheet bundle 14A gripped by the claws 9 of the grippers 8 is moved to the jogger 5.

In step S150, the CPU 21 controls the arms 2 so that the suction portions 8A suck and remove the lower wrapper 4A remaining after the sheet bundle 14A is taken out.

In step S160, the CPU 21 determines whether the removal of the lower wrapper 4A has been completed. If the lower wrapper 4A has not been removed, the CPU 21 obtains work information of the lower wrapper 4A by using the 3D sensor 6 and returns to step S150. In this case, the CPU 21 repeats steps S150 and S160 until it is determined in step S160 that the removal of the lower wrapper 4A has been completed. That is, the CPU 21 controls the arms 2 to remove the lower wrapper 4A.

If it is determined in step S160 that the removal of the lower wrapper 4A has been completed, it means that the sheet bundle 14A has been taken out of the wrapper 4, and the CPU 21 finishes the sheet handling processing shown in Fig. 7.

The CPU 21 executes the sheet handling processing shown in Fig. 7 for each wrapper 4 placed on the loading table 3 so as to remove the sheet bundle 14A from each wrapper 4 and to move the removed sheet bundle 14A to the jogger 5. The CPU 21 then starts the subsequent work process using the sheets 14.

One mode of the control system 1 that handles the sheets 14 has been discussed through illustration of the exemplary embodiment. However, the disclosed mode of the control system 1 is only an example and is not limited to that in the exemplary embodiment. Various modifications or improvements may be made to the exemplary embodiment without departing from the spirit and scope of the disclosure. Exemplary embodiments obtained by making modifications or improvements are also encompassed within the technical range of the disclosure.

For example, the order of steps of sheet handling processing illustrated in Fig. 7 may be changed without departing from the spirit and scope of the disclosure.

In the above-described exemplary embodiment, sheet handling processing is implemented by software by way of example. However, processing equivalent to sheet handling processing in the flowchart may be implemented by using hardware. In this case, sheet handling processing is executed faster than using software.

In the exemplary embodiments above, the term "processor" refers to hardware in a broad sense. Examples of the processor include general processors (CPU 21, for example) and dedicated processors (e.g., GPU: Graphics Processing Unit, ASIC: Application Specific Integrated Circuit, FPGA: Field Programmable Gate Array, and programmable logic device).

In the exemplary embodiments above, the term "processor" is broad enough to encompass one processor or plural processors in collaboration which are located physically apart from each other but may work cooperatively. The order of operations of the processor is not limited to one described in the embodiments above, and may be changed.

In the above-described exemplary embodiment, the control program is stored in the non-volatile memory 23 by way of example. However, the control program may be stored in a location other than the non-volatile memory 23. The control program of the disclosure may be recorded in a storage medium that can be read by the computer 20 and be provided.

For example, the control program may be provided as a result of being recorded in an optical disc, such as a CD-ROM (Compact Disk Read Only Memory), a DVD-ROM (Digital Versatile Disk Read Only Memory), and a Blu-ray disc. The control program may be provided as a result of being recorded in a portable semiconductor memory, such as a USB (Universal Serial Bus) memory and a memory card. The non-volatile memory 23, a CD-ROM, a DVD-ROM, a Blu-ray disc, a USB, and a memory card are examples of a non-transitory storage medium.

Additionally, the control system 1 may download the control program from an external device connected to a communication network via a communication unit and store the downloaded control program in the non-volatile memory 23 of the control device 10. In this case, the CPU 21 of the control device 10 reads this downloaded control program from the non-volatile memory 23 and executes sheet handling processing.

The appendix related to the exemplary embodiment is as follows.
(((1))) A control system comprising:
   a processor configured to:
   detect, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line;
   identify, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper;
   control an arm to be used for gripping an object so that a cutting device attached to the arm moves along outlines of the sheets on the identified side surface of the wrapping paper; and
   remove the sheet bundle from the wrapping paper opened by the cutting device by causing the arm to grip the sheet bundle exposed outside the wrapping paper.
(((2))) The control system according to (((1))), wherein the processor is configured to:
   control the arm, before opening the side surface of the wrapping paper, so that the arm contacts the side surface of the wrapping paper, which is to be opened, to shift the wrapping paper in a direction intersecting with the side surface; and
   identify the location of the side surface by detecting, with the three-dimensional sensor, the three-dimensional coordinate values and the inclination of the wrapping paper that has shifted.
(((3))) The control system according to (((2))), wherein the processor is configured to:
   obtain an attribute value representing an attribute of the sheets wrapped in the wrapping paper; and
   setting, by using the obtained attribute value of the sheets, strength of force used by the arm to shift the wrapping paper in the direction intersecting with the side surface of the wrapping paper.
(((4))) The control system according to (((3))), wherein the obtained attribute value indicates the number of sheets in the wrapping paper, a size of the sheets, and a ream weight or a basis weight of the sheets.
(((5))) The control system according to (((4))), wherein the obtained attribute value also indicates a material of the wrapping paper.
(((6))) The control system according to one of (((1))) to (((5))), wherein the processor is configured to control the arm so that the cutting device opens the side surface of the wrapping paper at a position included in a range above a center of the side surface and below a top edge of the side surface, in a state in which the wrapping paper is placed on a table so that the image forming surfaces of the sheets wrapped in the wrapping paper oppose a loading surface of the table disposed along a floor.
(((7))) The control system according to one of (((1))) to (((6))), wherein the processor is configured to control the arm to eliminate a piece of the opened wrapping paper remaining above the sheets after the side surface of the wrapping paper is opened.
(((8))) The control system according to one of (((1))) to (((7))), wherein the processor is configured to perform control, before causing the arm to grip the sheet bundle exposed outside the opened wrapping paper, to cause the arm to contact the sheets to arrange positions of the sheets so that positions of the outlines of the individual sheets are contained in a predetermined range when the sheets exposed outside the opened wrapping paper are seen from a position above the image forming surfaces of the sheets.
(((9))) The control system according to one of (((1))) to (((8))), wherein the processor is configured to detect the three-dimensional coordinate values and the inclination of the wrapping paper by using the three-dimensional sensor, the three-dimensional sensor being a three-dimensional sensor located at a fixed place so as not to change a relative position between the three-dimensional sensor and the wrapping paper.
(((10))) A control program causing a computer to execute a process comprising:
   detecting, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line;
   identifying, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper;
   controlling an arm to be used for gripping an object so that a cutting device attached to the arm moves along outlines of the sheets on the identified side surface of the wrapping paper; and
   removing the sheet bundle from the wrapping paper opened by the cutting device by causing the arm to grip the sheet bundle exposed outside the wrapping paper.
(((11))) A control method comprising:
   detecting, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line;
   identifying, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper;
   controlling an arm to be used for gripping an object so that a cutting device attached to the arm moves along outlines of the sheets on the identified side surface of the wrapping paper; and
   removing the sheet bundle from the wrapping paper opened by the cutting device by causing the arm to grip the sheet bundle exposed outside the wrapping paper.
(((12))) A control device comprising:
   a processor configured to:
   detect, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line;
   identify, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper;
   control an arm to be used for gripping an object so that a cutting device attached to the arm moves along outlines of the sheets on the identified side surface of the wrapping paper; and
   remove the sheet bundle from the wrapping paper opened by the cutting device by causing the arm to grip the sheet bundle exposed outside the wrapping paper.

According to (((1))), (((10))), (((11))), and (((12))), it is possible to provide a control system, a control program, a control method, and a control device that can make it possible to remove a sheet bundle from wrapping paper without intervention of a skilled operator.

According to (((2))), it is possible to allow the arm to grip a sheet bundle more easily than when wrapping paper is not shifted.

According to (((3))), it is possible to move wrapping paper by a prescribed distance or longer regardless of which type of sheets are wrapped by the wrapping paper.

According to (((4))), it is possible to set the strength of force to move wrapping paper based on the weight of sheets wrapped by the wrapping paper.

According to (((5))), it is possible to set the strength of force to move wrapping paper based on the friction force of the wrapping paper.

According to (((6))), it is possible to allow the arm to grip a sheet bundle more easily than when the side surface of wrapping paper is opened at a position in a range from the center of the side surface to the bottom of the side surface.

According to (((7))), it is possible to separate wrapping paper from a sheet bundle wrapped in the wrapping paper without mixing them with each other.

According to (((8))), it is possible to allow the arm to grip a sheet bundle more easily than when the positions of sheets are not arranged to be flat.

According to (((9))), it is possible to reduce the time taken to detect the three-dimensional coordinates and the inclination of wrapping paper, compared with when a three-dimensional sensor is attached to the arm.

This application is based on Japanese Patent Application No. 2023-025469 filed on February 21, 2023, the entire contents of which are incorporated herein by reference.

### Reference Signs List

- 1: control system
- 2: arm
- 3: loading table
- 4: wrapper (wrapping paper)
- 4A: lower wrapper
- 4B: upper wrapper
- 4U: bottom surface of wrapper
- 4S: side surface of wrapper
- 4T: top surface of wrapper
- 5: jogger
- 6: 3D sensor
- 7: pillar
- 8: gripper
- 8A: suction portion
- 8B: knife
- 9 (9A, 9B): claw
- 10: control device
- 11: position detector
- 12: side surface identifier
- 13: controller
- 14: sheet
- 14A: sheet bundle
- 14S: side surface of sheet bundle
- 16: stand
- 20: computer
- 21: CPU
- 22: RAM
- 23: non-volatile memory
- 24: I/O
- 25: bus
- D: moving distance
- L1 to L4: line

## Claims

1. A control system comprising:
a processor configured to:
detect, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line;
identify, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper;
control an arm to be used for gripping an object so that a cutting device attached to the arm moves along outlines of the sheets on the identified side surface of the wrapping paper; and
remove the sheet bundle from the wrapping paper opened by the cutting device by causing the arm to grip the sheet bundle exposed outside the wrapping paper.

2. The control system according to claim 1, wherein the processor is configured to:
control the arm, before opening the side surface of the wrapping paper, so that the arm contacts the side surface of the wrapping paper, which is to be opened, to shift the wrapping paper in a direction intersecting with the side surface; and
identify the location of the side surface by detecting, with the three-dimensional sensor, the three-dimensional coordinate values and the inclination of the wrapping paper that has shifted.

3. The control system according to claim 2, wherein the processor is configured to:
obtain an attribute value representing an attribute of the sheets wrapped in the wrapping paper; and
setting, by using the obtained attribute value of the sheets, strength of force used by the arm to shift the wrapping paper in the direction intersecting with the side surface of the wrapping paper.

4. The control system according to claim 3, wherein the obtained attribute value indicates the number of sheets in the wrapping paper, a size of the sheets, and a ream weight or a basis weight of the sheets.

5. The control system according to claim 4, wherein the obtained attribute value also indicates a material of the wrapping paper.

6. The control system according to one of claims 1 to 5, wherein the processor is configured to control the arm so that the cutting device opens the side surface of the wrapping paper at a position included in a range above a center of the side surface and below a top edge of the side surface, in a state in which the wrapping paper is placed on a table so that the image forming surfaces of the sheets wrapped in the wrapping paper oppose a loading surface of the table disposed along a floor.

7. The control system according to claim 6, wherein the processor is configured to control the arm to eliminate a piece of the opened wrapping paper remaining above the sheets after the side surface of the wrapping paper is opened.

8. The control system according to claim 7, wherein the processor is configured to perform control, before causing the arm to grip the sheet bundle exposed outside the opened wrapping paper, to cause the arm to contact the sheets to arrange positions of the sheets so that positions of the outlines of the individual sheets are contained in a predetermined range when the sheets exposed outside the opened wrapping paper are seen from a position above the image forming surfaces of the sheets.

9. The control system according to one of claims 1 to 5, wherein the processor is configured to detect the three-dimensional coordinate values and the inclination of the wrapping paper by using the three-dimensional sensor, the three-dimensional sensor being a three-dimensional sensor located at a fixed place so as not to change a relative position between the three-dimensional sensor and the wrapping paper.

10. A control method comprising:
detecting, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line;
identifying, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper;
controlling an arm to be used for gripping an object so that a cutting device attached to the arm moves along outlines of the sheets on the identified side surface of the wrapping paper; and
removing the sheet bundle from the wrapping paper opened by the cutting device by causing the arm to grip the sheet bundle exposed outside the wrapping paper.

11. A control program causing a computer to execute a process comprising:
detecting, by using a three-dimensional sensor that measures a shape of an object, three-dimensional coordinate values and an inclination of wrapping paper wrapping a sheet bundle constituted by sheets, the three-dimensional coordinate values and the inclination representing a position and a shape of the wrapping paper, the inclination of the wrapping paper being an inclination with respect to a reference line;
identifying, by using the three-dimensional coordinate values and the inclination of the wrapping paper, a location of a side surface of the wrapping paper, the side surface being a surface of the wrapping paper which intersects with image forming surfaces of the sheets wrapped in the wrapping paper;
controlling an arm to be used for gripping an object so that a cutting device attached to the arm moves along outlines of the sheets on the identified side surface of the wrapping paper; and
removing the sheet bundle from the wrapping paper opened by the cutting device by causing the arm to grip the sheet bundle exposed outside the wrapping paper.
